# EUROPEAN PATENT APPLICATION

(11) **EP 4 170 786 A1**
(43) Date of publication of application: **26.04.2023**
(21) Application number: 21828577.3
(22) Date of filing: 22.06.2021
(51) Int. Cl.: H01M 50/197, H01G 11/74, H01G 11/78, H01M 50/105, H01M 50/184, H01M 50/193, H01M 50/531

(54) **SEALING FILM, ELECTRODE LEAD MEMBER, AND BATTERY**

(30) Priority: 23.06.2020 JP 2020107874
(71) Applicant: Fujimori Kogyo Co., Ltd., Tokyo 112-0002 (JP)
(72) Inventor: TAKEYAMA, Shunsuke, Tokyo 112-0002 (JP); SAKURAGI, Takanori, Tokyo 112-0002 (JP); MEGURO, Atsufumi, Tokyo 112-0002 (JP); SHIMIZU, Takashi, Tokyo 112-0002 (JP)
(74) Representative: Lavoix
(86) International application number: PCT/JP2021/023561
(87) International publication number: WO 2021/261478

(57) **Abstract**

A sealing film which seals between a metal first base and a second base, the sealing film including: a first adhesive layer that mainly contains an acid-modified polyolefin and adheres to the first base; a second adhesive layer that mainly contains a polyolefin and adheres to the second base; and a base material layer provided between the first adhesive layer and the second adhesive layer, in which the base material layer contains (A), (B), and (C), a ratio [(A)/(B) + (C)] is 90/10 to 20/80, a content percentage of (B) with respect to a total amount of (A), (B), and (C) is 5% by mass or more and 70% by mass or less, and a content percentage of (C) with respect to the total amount of (A), (B), and (C) is 5% by mass or more and 70% by mass or less.

## Description

### [Technical Field]

The present invention relates to a sealing film, an electrode lead member, and a battery.

Priority is claimed on Japanese Patent Application No. 2020-107874, filed June 23, 2020, the content of which is incorporated herein by reference.

### [Background Art]

In recent years, secondary batteries such as lithium ion batteries, capacitors, and the like have been attracting attention as storage batteries for storing electrical energy. Such a battery includes a battery main body, a storage container that stores the battery main body, and an electrode lead connected to the battery main body, for example.

The storage container is produced using a laminate for a battery exterior having exceptional waterproofing properties and light shielding properties. The laminate for a battery exterior is a laminate in which a base material layer made of polyamide or the like, and an aluminum foil are laminated, for example. The electrode lead is sealed in the storage container while a portion including one end is drawn out of the storage container.

In the battery described above, when water enters the storage container, the water may react with components in an electrolytic solution and generate hydrogen fluoride. Hydrogen fluoride may have an influence such as a deterioration of electrode leads and shortening of battery service life. Therefore, it has been proposed to interpose a film (resin film) for sealing between a storage container and an electrode lead (refer to Patent Document 1, for example).

The film for sealing adheres the electrode lead and the storage container to each other to prevent the formation of a gap between the storage container and the electrode lead. This prevents water from entering the inside of the storage container from the outside through the gap.

### [Citation List]

### [Patent Document]

[Patent Document 1] Japanese Unexamined Patent Application, First Publication No. 2017-73200

### [Summary of Invention]

### [Technical Problem]

A film for sealing (hereinafter referred to as sealing film) preferably has a high adhesive strength with respect to an electrode lead. In addition, the sealing film is required to maintain the adhesive strength between resin layers constituting the sealing film to prevent the resin layers from peeling off from each other.

The present invention has been made in view of the above-mentioned circumstances, and an object thereof is to provide a sealing film having a high adhesive strength with respect to an electrode lead and maintaining the adhesive strength between resin layers constituting the sealing film to prevent the resin layers from peeling off from each other, an electrode lead member, and a battery.

### [Solution to Problem]

In order to achieve the above-mentioned object, one aspect of the present invention includes the following aspects.
[1] A sealing film which seals between a metal first base and a second base, the sealing film including: a first adhesive layer that mainly contains an acid-modified polyolefin and adheres to the first base; a second adhesive layer that mainly contains a polyolefin and adheres to the second base; and a base material layer provided between the first adhesive layer and the second adhesive layer, in which the base material layer contains the following components (A), (B), and (C), a ratio [(A)/(B) + (C)] of a total amount of the component (B) and the component (C) to the component (A) is 90/10 to 20/80, a content percentage of the component (B) with respect to a total amount of the component (A), the component (B), and the component (C) is 5% by mass or more and 70% by mass or less, and a content percentage of the component (C) with respect to the total amount of the component (A), the component (B), and the component (C) is 5% by mass or more and 70% by mass or less.
   The component (B): a resin constituting the first adhesive layer.
   The component (C): a resin constituting the second adhesive layer.
   The component (A): a resin different from the component (B) and the component (C).
[2] The sealing film according to [1], in which a melting point of the component (A) is higher than a melting point of the resin constituting the first adhesive layer or the second adhesive layer.
[3] The sealing film according to [1] or [2], in which the polyolefin constituting the second adhesive layer includes an acid-modified polyolefin.
[4] The sealing film according to any one of [1] to [3], in which the component (A) includes a polypropylene resin having a melting point of 150°C or higher and 170°C or lower, and the resin constituting the second adhesive layer is a polypropylene or acid-modified polypropylene having a melting point of 110°C or higher and 150°C or lower.
[5] The sealing film according to any one of [1] to [4], in which the resin constituting the first adhesive layer is an acid-modified polypropylene having a melting point of 110°C or higher and 150°C or lower.
[6] An electrode lead member including: the sealing film according to any one of [1] to [5]; and the first base that is an electrode lead extending in one direction.
[7] A battery including: the electrode lead member according to [6]; a battery main body to which the electrode lead is connected; and the second base that is a storage container storing the battery main body.

### [Advantageous Effects of Invention]

According to the present invention, a sealing film having a high adhesive strength with respect to an electrode lead and maintaining the adhesive strength between resin layers constituting the sealing film to prevent the resin layers from peeling off from each other, an electrode lead member, and a battery can be provided.

### [Brief Description of Drawings]

FIG. 1 is a schematic cross-sectional view showing a sealing film of an embodiment.
FIG. 2 is a schematic perspective view showing an electrode lead member of an embodiment.
FIG. 3 is a schematic perspective view showing a battery of an embodiment.
FIG. 4 is a cross-sectional view taken along the line I-I in FIG. 3.

### [Description of Embodiments]

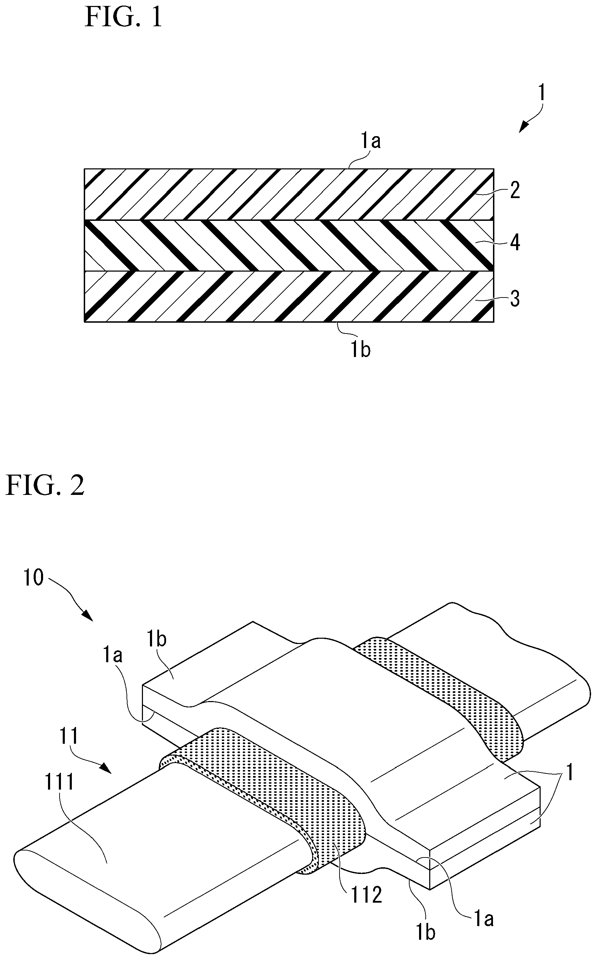

Hereinafter, a sealing film, an electrode lead member, and a battery according to embodiments will be described with reference to FIGS. 1 to 4. In the drawings, the dimensions and ratios of constituent elements may differ from the actual ones.

### <Sealing film>

FIG. 1 is a schematic cross-sectional view showing a sealing film 1 of an embodiment. FIG. 2 is a schematic perspective view showing an electrode lead member 10 of an embodiment.

As shown in FIG. 2, the electrode lead member 10 includes an electrode lead 11 and the sealing film 1. The electrode lead 11 is an example of a "first base."

As shown in FIG. 1, the sealing film 1 includes a first adhesive layer 2, a second adhesive layer 3, and a base material layer 4.

An optional layer other than the first adhesive layer 2, the second adhesive layer 3, and the base material layer 4 may be included as long as the effect of the present invention is not impaired.

### [First adhesive layer]

The first adhesive layer 2 is a layer that is fusion-bonded (adhered) to the electrode lead 11 (refer to FIG. 2) by heating or pressurizing. The surface of the first adhesive layer 2 is one surface 1a of the sealing film 1. The first adhesive layer 2 is a resin layer containing a resin.

The first adhesive layer 2 mainly contains an acid-modified polyolefin. When the first adhesive layer 2 "mainly contains an acid-modified polyolefin," this means that the content of the acid-modified polyolefin is the highest among resins constituting the first adhesive layer 2.

With respect to the total amount of the first adhesive layer 2, the first adhesive layer 2 preferably contains 50% by mass or more of an acid-modified polyolefin (preferably contains more than 50% by mass of an acid-modified polyolefin). The first adhesive layer 2 preferably contains 80% by mass or more of an acid-modified polyolefin with respect to the total amount of the first adhesive layer 2.

The first adhesive layer 2 may contain 100% by mass of an acid-modified polyolefin with respect to the total amount of the first adhesive layer 2.

In one embodiment of the present invention, when the first adhesive layer 2 "mainly contains an acid-modified polyolefin," there is an aspect in which the first adhesive layer 2 contains 80% by mass or more and 100% by mass or less of an acid-modified polyolefin with respect to the total amount of the first adhesive layer 2.

Examples of polyolefins constituting the first adhesive layer 2 include polypropylene, polyethylene, poly-1-butene, and polyisobutylene. Among them, polypropylene is preferable because of its exceptional flexibility. Hereinafter, polypropylene may be abbreviated as "PP."

A polyolefin may be a copolymer of propylene and ethylene (propylene-ethylene copolymer). Among these, a random copolymer of propylene and ethylene is preferable. A polyolefin may be a copolymer of propylene and an olefinic monomer. Examples of olefinic monomers include 1-butene, isobutylene, and 1-hexene.

An acid-modified polyolefin is a polyolefin resin modified with unsaturated carboxylic acids or derivatives thereof and is a resin having an acid functional group such as a carboxy group and a carboxylic acid anhydride group in a polyolefin resin.

An acid-modified polyolefin is obtained by modifying a polyolefin resin with unsaturated carboxylic acids or derivatives thereof, or by copolymerizing of acid functional group-containing monomers with olefins. When an acid-modified polyolefin is used, the adhesiveness of the first adhesive layer 2 to the electrode lead 11 (refer to FIG. 2) can be enhanced.

As an acid-modified polyolefin, an acid-modified polypropylene (acid-modified PP) is preferable because of its exceptional heat resistance. An acid-modified PP is a polymer obtained by graft-copolymerizing a polypropylene or a propylene-ethylene copolymer with a monomer having a carboxy group, for example.

Examples of monomers having a carboxy group include unsaturated carboxylic acids such as acrylic acid and methacrylic acid; unsaturated carboxylic acid esters such as ethyl acrylate; and acid anhydrides such as maleic acid anhydride.

An acid-modified PP includes an ionomer obtained by neutralizing a carboxylic acid group of an acid-modified polymer of a polypropylene or an acid-modified polymer of a propylene-ethylene copolymer with a metal hydroxide, an alkoxide, a lower fatty acid salt, or the like.

The acid group of the acid-modified PP is preferably a maleic acid anhydride group. That is, a maleic acid anhydride-modified PP is preferable as the acid-modified PP.

The resin constituting the first adhesive layer is preferably an acid-modified polypropylene having a melting point of 110°C or higher and 150°C or lower.

When the melting point of the resin constituting the first adhesive layer 2 is 110°C or higher, the first adhesive layer 2 is unlikely to become excessively thin at the time of thermocompression bonding, thereby easily ensuring the strength of adhesive. When the melting point of the resin constituting the first adhesive layer 2 is 150°C or less, because the resin is likely to flow at the time of thermocompression bonding, the resin sufficiently wraps around the electrode lead 11, thereby easily sealing the whole circumference of the electrode lead 11.

When the "resin constituting the first adhesive layer 2" is a polymer alloy of two or more types of resins, the "melting point of the resin constituting the first adhesive layer 2" means the melting point of the polymer alloy constituting the first adhesive layer 2.

In the first adhesive layer 2, optional components other than a polyolefin include known additives such as stabilizers, antistatic agents, and colorants.

The thickness of the first adhesive layer 2 can be 5 or more and 90 or less, preferably 25 or more and 70 or less, with the entire thickness of the sealing film 1 being 100. That is, the thickness of the first adhesive layer 2 can be 5% or more and 90% or less, preferably 25% or more and 70% or less, of the entire thickness of the sealing film 1. A ratio of the thicknesses of the layers when the entire thickness of the sealing film 1 is 100 is referred to as a "thickness ratio."

When the thickness ratio of the first adhesive layer 2 is equal to or more than the above-mentioned lower limit value, a sufficient adhesive strength between the first adhesive layer 2 and the electrode lead 11 can be ensured. When the thickness ratio of the first adhesive layer 2 is equal to or less than the above-mentioned upper limit value, a sufficient thickness can be imparted to the second adhesive layer 3 and the base material layer 4.

### [Second adhesive layer]

The second adhesive layer 3 is a layer that is fusion-bonded (adhered) to a storage container by heating or pressurizing, for example. The storage container is an example of a second base. The storage container will be described later. The surface of the second adhesive layer 3 is the other surface 1b of the sealing film 1. The second adhesive layer 3 is a resin layer containing a resin.

The second adhesive layer 3 mainly contains a polyolefin. When the second adhesive layer 3 "mainly contains a polyolefin," this means that the content of the polyolefin is the highest among resins constituting the second adhesive layer 3.

With respect to the total amount of the second adhesive layer 3, the second adhesive layer 3 preferably contains 50% by mass or more of a polyolefin (preferably contains more than 50% by mass of a polyolefin). The second adhesive layer 3 preferably contains 80% by mass or more of a polyolefin with respect to the total amount of the second adhesive layer 3.

The second adhesive layer 3 may contain 100% by mass of an acid-modified polyolefin with respect to the total amount of the second adhesive layer 3.

In one embodiment of the present invention, when the second adhesive layer 3 "mainly contains an acid-modified polyolefin," there is an aspect in which the second adhesive layer 3 contains 80% by mass or more and 100% by mass or less of an acid-modified polyolefin with respect to the total amount of the second adhesive layer 3.

Examples of polyolefins constituting the second adhesive layer 3 include polypropylene (PP), polyethylene, poly-1-butene, and polyisobutylene. Among them, PP is preferable because of its exceptional flexibility.

A polyolefin may be a copolymer of propylene and ethylene (propylene-ethylene copolymer). Among them, a random copolymer of propylene and ethylene is preferable. A polyolefin may be a copolymer (for example, random copolymer) of propylene and an olefinic monomer. Examples of olefinic monomers include 1-butene, isobutylene, and 1-hexene.

A polyolefin constituting the second adhesive layer 3 may be an acid-modified polyolefin. As the acid-modified polyolefin, an acid-modified PP is preferable because of its exceptional heat resistance. As the acid-modified PP, the above-mentioned acid-modified PP exemplified as the material of the first adhesive layer 2 is suitably used.

As the acid-modified PP constituting the second adhesive layer 3, a polymer obtained by acid-modifying a random copolymer of propylene and ethylene is preferable because of its exceptional flexibility. When an acid-modified polyolefin is used, the adhesiveness of the second adhesive layer 3 to the storage container that is the second base is easily enhanced.

The second adhesive layer 3 may contain both an acid-modified PP and an acid-modified polyethylene. When the second adhesive layer 3 contains both an acid-modified PP and an acid-modified polyethylene, the melting point of the second adhesive layer 3 is lowered, which makes it possible to lower the heating temperature when fusion-bonding the second adhesive layer 3. Therefore, a deterioration of the first adhesive layer 2 due to high-temperature heating can be prevented.

The resin constituting the second adhesive layer is preferably a polypropylene or acid-modified polypropylene having a melting point of 110°C or higher and 150°C or lower.

When the melting point of the resin constituting the second adhesive layer 3 is 110°C or higher, the second adhesive layer 3 is unlikely to become excessively thin at the time of thermocompression bonding, thereby making ensuring of adhesive strength easy. When the melting point of the resin constituting the second adhesive layer 3 is 150°C or less, the resin is likely to flow at the time of thermocompression bonding, making sealing between the storage container and the electrode lead 11 easy.

When the "resin constituting the second adhesive layer 3" is a polymer alloy of two or more types of resins, the "melting point of the resin constituting the second adhesive layer 3" means the melting point of the polymer alloy constituting the second adhesive layer 3.

In the second adhesive layer 3, optional components other than an acid-modified polyolefin include known additives such as stabilizers, antistatic agents, and colorants.

The thickness (thickness ratio) of the second adhesive layer 3 can be 5 or more and 90 or less, preferably 10 or more and 50 or less, with the entire thickness of the sealing film 1 being 100. That is, the thickness of the second adhesive layer 3 can be 5% or more and 90% or less, preferably 10% or more and 50% or less, of the entire thickness of the sealing film 1.

When the thickness ratio of the second adhesive layer 3 is equal to or more than the above-mentioned lower limit value, the adhesive strength between the second adhesive layer 3 and the storage container that is the second base is easily and sufficiently ensured. When the thickness ratio of the second adhesive layer 3 is equal to or less than the above-mentioned upper limit value, a sufficient thickness can be imparted to the first adhesive layer 2 and the base material layer 4. Therefore, the adhesive strength between the first adhesive layer 2 and the electrode lead 11 is easily increased.

### [Base material layer]

The base material layer 4 is provided to be interposed between the first adhesive layer 2 and the second adhesive layer 3.

The base material layer 4 contains the following components (A), (B), and (C).

The component (B): a resin constituting the first adhesive layer.

The component (C): a resin constituting the second adhesive layer.

The component (A): a resin different from the component (B) and the component (C).

The ratio [(A)/(B) + (C)] of the total amount of the component (B) and the component (C) to the component (A) is 90/10 to 20/80.

When the content ratio of the component (A) is equal to or more than the above-mentioned lower limit value, a sufficient thickness can be imparted to the base material layer 4. Therefore, both the adhesive strength between the first adhesive layer 2 and the electrode lead 11 and the adhesive strength between the second adhesive layer 3 and the storage container can be increased.

The content percentage of the component (B) with respect to the total amount of the component (A), the component (B), and the component (C) is 5% by mass or more and 70% by mass or less.

In addition, the content percentage of the component (C) with respect to the total amount of the component (A), the component (B), and the component (C) is 5% by mass or more and 70% by mass or less.

Examples of the component (B) include an acid-modified polyolefin constituting the first adhesive layer.

Examples of the component (C) include a polyolefin constituting the second adhesive layer.

A resin constituting the base material layer 4 contains the component (A), the component (B), and the component (C). An optional component other than the component (A), the component (B), and the component (C) may be contained within a range not impairing the effect of the present embodiment. In the present embodiment, the resin constituting the base material layer 4 preferably consists of the component (A), the component (B), and the component (C).

When the resin constituting the base material layer 4 contains the component (B), the affinity between the base material layer 4 and the first adhesive layer 2 is easily improved. Therefore, the adhesive strength between the base material layer 4 and the first adhesive layer 2 can be easily maintained, which makes it possible to prevent the resins from peeling off from each other.

When the resin constituting the base material layer 4 contains the component (C), the affinity between the base material layer 4 and the second adhesive layer 3 is easily improved. Therefore, the adhesive strength between the base material layer 4 and the second adhesive layer 3 can be easily maintained, which makes it possible to prevent the resins from peeling off from each other.

The content percentages of the component (B) and the component (C) in the resin constituting the base material layer 4 may be the same as or different from each other. In the present embodiment, from the viewpoint of maintaining each of the adhesive strength between the first adhesive layer and the base material layer and the adhesive strength between the second adhesive layer and the base material layer at the same level, the content percentages of the component (B) and the component (C) are preferably the same.

In addition, it is not prohibited that the component (B) and the component (C) are the same.

Preferable combinations of the content percentages (% by mass) of the component (A), the component (B), and the component (C) in the present embodiment are described below.
- (C)/(A)/(B) = 5/90/5
- (C)/(A)/(B) = 10/80/10
- (C)/(A)/(B) = 15/70/15
- (C)/(A)/(B) = 20/60/20
- (C)/(A)/(B) = 25/50/25
- (C)/(A)/(B) = 30/40/30
- (C)/(A)/(B) = 35/30/35
- (C)/(A)/(B) = 40/20/40
- (C)/(A)/(B) = 60/20/20
- (C)/(A)/(B) = 70/20/10
- (C)/(A)/(B) = 20/20/60
- (C)/(A)/(B) = 10/20/70

Examples of polyolefins as the component (A) include polypropylene (PP), polyethylene, poly-1-butene, and polyisobutylene, which are different from the component (B) and the component (C). Among them, PP is preferable because of its exceptional flexibility.

A polyolefin as the component (A) may be a homopolymer of one type of olefin or a copolymer of two or more types of olefins. Examples of homopolymers include homopolymers of propylene only (homo PP). Examples of copolymers include copolymers (such as a propylene-ethylene copolymer) of propylene and olefinic monomers (ethylene, 1-butene, isobutylene, 1-hexene, and the like).

As the polyolefin as the component (A), an impact copolymer (ICP) is preferable. An ICP has a phase-separated structure having a first phase and a second phase, for example, a sea-island structure. The sea-island structure is a structure in which a plurality of second phases corresponding to "islands" are dispersed in a first phase corresponding to "sea."

The first phase is constituted of a homopolymer of an olefinic monomer such as propylene and ethylene, for example.

The second phase is constituted of a polymer different from the homopolymer constituting the first phase. The second phase contains a polymer (such as ethylene propylene rubber (EPR)) of olefinic monomers such as propylene and ethylene, for example. The second phase is constituted of a main phase and a surface layer covering the surface of the main phase, for example. The main phase is constituted of polyethylene, for example. The surface layer is constituted of EPR, for example.

ICPs in which a homopolymer constituting a first phase is homo PP are called polypropylene ICPs or polypropylene dispersions. An ICP in which a homopolymer constituting a first phase is homo PP is a so-called block PP. ICPs are also called heterophasic copolymers or block copolymers.

The thickness (thickness ratio) of the base material layer 4 can be 5 or more and 90 or less, preferably 25 or more and 70 or less, with the entire thickness of the sealing film 1 being 100. That is, the thickness of the base material layer 4 can be 5% or more and 90% or less, preferably 25% or more and 70% or less, of the entire thickness of the sealing film 1.

When the thickness ratio of the base material layer 4 is equal to or more than the above-mentioned lower limit value, the resin does not excessively flow, and thereby the necessary flowability at the time of pressure bonding is easily exhibited.

When the thickness ratio of the base material layer 4 is equal to or less than the above-mentioned upper limit value, a sufficient thickness can be imparted to the first adhesive layer 2. Therefore, the adhesive strength between the first adhesive layer 2 and the electrode lead 11 can be increased. Furthermore, when the thickness ratio of the base material layer 4 is 90 or less, the flowability of the resin does not decrease, and thereby the flowability of the resin at the time of thermocompression bonding can be controlled within an appropriate range.

The component (A) contained in the base material layer 4 preferably contains a polypropylene resin having a melting point of 150°C or higher and 170°C or lower.

When the melting point of the component (A) contained in the base material layer 4 is 150°C or higher, heat resistance can be imparted to the sealing film 1.

When the melting point of the component (A) contained in the base material layer 4 is 170°C or lower, flexibility can be imparted to the sealing film 1. Therefore, a gap is less likely to be generated between the electrode lead 11 and the sealing film 1.

A melting point M4 of the component (A) contained in the base material layer 4 is preferably higher than a melting point M2 of the resin constituting the first adhesive layer 2 or a melting point M3 of the resin constituting the second adhesive layer 3. That is, the melting point M4 is preferably higher than the melting point M2 or the melting point M3. It is desirable that the melting point M4 be higher than both the melting point M2 and the melting point M3. In one aspect of the present invention, it is desirable that the melting point M4 be higher than at least one of the melting point M2 and the melting point M3.

Examples of methods for obtaining a resin film constituting the base material layer 4 include a method of melt-kneading the component (A), the component (B), and the component (C) in a predetermined ratio and thereafter extrusion molding.

### <Electrode lead member>

As shown in FIG. 2, the electrode lead member 10 includes the electrode lead 11 and a pair of the sealing films 1.

A pair of the sealing films 1 are disposed so that the first adhesive layers 2 face each other. A pair of the sealing films 1 sandwich the electrode lead 11. The pair of the sealing films 1 are respectively in contact with regions corresponding to one surface and the other surface of the electrode lead 11. Therefore, the pair of the sealing films 1 are in contact with the whole circumference of the electrode lead 11 as a whole.

The electrode lead 11 has a lead main body 111 and a surface treatment layer 112. The electrode lead 11 extends linearly in one direction. The electrode lead 11 is made of metal.

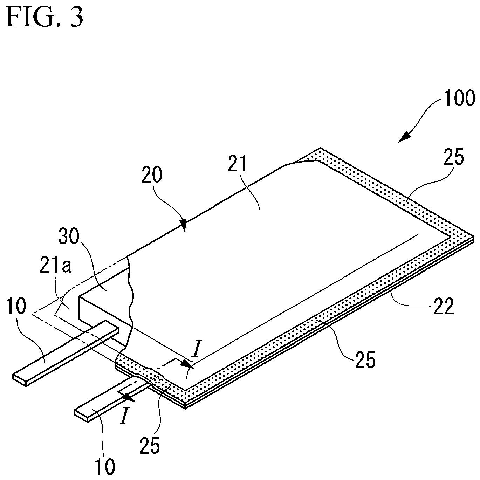

The electrode lead 11 has conductivity. The electrode lead 11 is electrically connected to a lithium ion battery 30 (refer to FIG. 3). The electrode lead 11 applies an electric current between the lithium ion battery 30 and an external apparatus.

As a material of the lead main body 111, known metals such as aluminum, copper, nickel, iron, gold, platinum, and various alloys can be used, for example. Among them, aluminum or copper is preferable because of its exceptional conductivity and cost advantage.

The lead main body 111 may have a nickel-plated surface. The nickel plate of the lead main body 111 may be formed by electroplating using a Watts bath containing nickel sulfate, nickel chloride, boric acid, and the like as main components. The nickel plating of the lead main body 111 is preferably performed using a nickel sulfamate plating bath containing nickel sulfamate and boric acid as main components. Because the plated coating formed by this method has exceptional flexibility, the plated coating is less likely to crack.

The lead main body 111 is preferably an aluminum plate or a nickel-plated copper plate.

The surface treatment layer 112 is formed on the surface of the lead main body 111. The surface treatment layer 112 has corrosion resistance. The "corrosion resistance" refers to a property of being resistant to corrosion due to an electrolytic solution inside a battery. Examples of the surface treatment layer 112 include acid-resistant coatings formed of phosphoric acid salts, chromic acid salts, fluoride, triazine thiol compounds, and the like as formation materials. The acid-resistant coating can be formed by subjecting the lead main body 111 to chemical conversion treatment.

Although the surface treatment layer 112 is formed on part of the surface of the lead main body 111 in FIG. 2, the surface treatment layer 112 may be formed on the entire region of the surface of the lead main body 111. The surface treatment layer may not be formed in the electrode lead.

Since the first adhesive layer 2, the base material layer 4, and the second adhesive layer 3 are configured as described above, the adhesive strength of the sealing film 1 with respect to the electrode lead 11 is favorable. In addition, the adhesive strength between the resin layers constituting the sealing film is maintained in the sealing film 1, and thereby the resin layers can be prevented from peeling off from each other.

Since the adhesive strength of the sealing film 1 with respect to the electrode lead 11 is favorable, water can be prevented from entering the inside of the storage container from the outside. Since the adhesive strength between the resin layers constituting the sealing film is maintained in the sealing film 1, which makes it possible to prevent the resin layers from peeling off from each other, a battery 100 that is less likely to deteriorate and has high reliability can be realized.

The sealing film 1 contains an acid-modified polyolefin as a formation material of the first adhesive layer 2. Therefore, thermal fusion-bonding of the first adhesive layer 2 to the electrode lead 11 is easily caused, and thereby the interface between the electrode lead 11 and the sealing film 1 can be sealed. Accordingly, water can be prevented from entering the inside of the storage container from the outside.

The sealing film 1 contains an acid-modified polyolefin as a formation material of the second adhesive layer 3. Therefore, thermal fusion-bonding of the second adhesive layer 3 to the resin material constituting the storage container of the battery is easily caused, and thereby the interface between the storage container and the sealing film 1 is easily sealed.

Since the electrode lead member 10 includes the sealing film 1, water can be prevented from entering the inside of the storage container from the outside.

### <Battery>

FIG. 3 is a schematic perspective view showing the battery 100 of an embodiment.

As shown in FIG. 3, the battery 100 includes the above-mentioned electrode lead member 10, a storage container 20, and the lithium-ion battery 30 (battery main body).

The storage container 20 has a container main body 21 and a lid 22. The storage container 20 is an example of the "second base."

The container main body 21 has a formed portion 21a that forms a recess for storing the lithium-ion battery 30. The container main body 21 is obtained by draw forming a laminate for a battery exterior. The lid 22 is formed of the laminate for a battery exterior and has a plane view area equivalent to that of the container main body 21. The laminate for a battery exterior will be described later.

The storage container 20 is formed by superimposing the container main body 21 and the lid 22 and heat-sealing a circumferential edge portion 25.

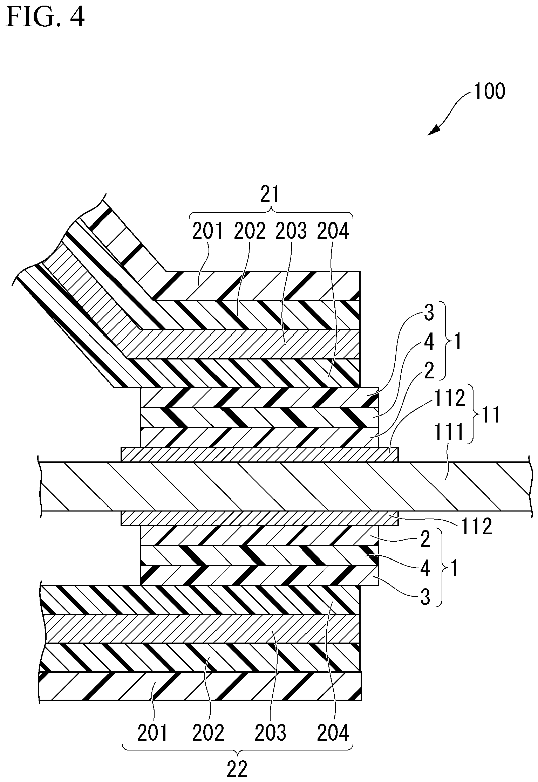

FIG. 4 is a cross-sectional view taken along the line I-I in FIG. 3.

As shown in FIG. 4, the laminate for a battery exterior, which is the constituent material of the container main body 21 and the lid 22, is a laminate in which a first film substrate 201, a second film substrate 202, a metal foil 203, and a sealant layer 204 are laminated in this order.

Resins constituting the first film substrate 201 and the second film substrate 202 are not particularly limited, but polyamide, polyethylene terephthalate (PET), a phenolic resin, polypropylene, and the like are suitable.

As the metal foil 203, an aluminum foil, a stainless-steel foil, a copper foil, an iron foil, and the like are preferable.

The sealant layer 204 is in contact with the second adhesive layer 3 of the sealing film 1 for thermal fusion-bonding. As a resin constituting the sealant layer 204, a resin that can be fusion-bonded to the sealing film 1 is selected. Examples of the resin constituting the sealant layer 204 include polypropylene resins and polyethylene resins. As the polypropylene resins, a homopolymer of polypropylene, a copolymer of propylene and ethylene, and the like can be used. As the polyethylene resins, low-density polyethylene, linear low-density polyethylene, and the like may be used.

As shown in FIGS. 3 and 4, in the battery 100, the electrode lead 11 is drawn out of the storage container 20 from the lithium ion battery 30 inside the storage container 20 (inside the formed portion 21a). The electrode lead 11 is fusion-bonded to the sealant layer 204 of the storage container 20 via the sealing film 1.

According to the battery 100, since the electrode lead member 10 has the sealing film 1 described above, water can be prevented from entering the inside of the storage container from the outside. Therefore, the battery 100 that is less likely to deteriorate and has high reliability can be realized.

Although suitable embodiments according to the present invention have been described above with reference to the accompanying drawings, the present invention is not limited to such examples. The various shapes, combinations, and the like of the constituent members described in the above-mentioned examples are examples and can be variously changed based on design requirements and the like within the range not deviating from the gist of the present invention. For example, the first adhesive layer and the second adhesive layer may contain a resin other than a polyolefin.

### [Examples]

Hereinafter, the present invention will be described with reference to examples, but the present invention is not limited to these examples.

### <Production of sealing film>

A sealing film in which a first adhesive layer, a base material layer, and a second adhesive layer was laminated in this order was produced as follows. Each of resins used as raw materials for each layer was separately heated and melted, multilayer film formation was simultaneously performed using an extruder capable of simultaneous multilayer extrusion molding, and thereby a laminate was obtained. By cutting this laminate into a predetermined size, a sealing film of each example and comparative example was obtained. The sealing film was formed in a band shape (width 15 mm, thickness 150 µm).

The constituent materials of the first adhesive layer, the base material layer, and the second adhesive layer were as follows.

First adhesive layer: a maleic acid anhydride-modified polypropylene (melting point 140°C), which is described as (B) in Table 1.

Second adhesive layer: a random copolymer of propylene and ethylene (melting point 140°C), which is described as (C) in Table 1.

Base material layer: a resin consisting of (B) above, (C) above, and (A), where (A) is a polypropylene ICP (melting point 161°C).

In Table 1, the formulation ratios of (A), (B), and (C) are the formulation ratios (% by mass) shown in [ ] in Table 1.

The melting point M4 of the polypropylene ICP, which is the resin constituting the base material layer, is higher than the melting point M2 of the resin constituting the first adhesive layer and the melting point M3 of the resin constituting the second adhesive layer.

The maleic acid anhydride-modified polypropylene is a polymer obtained by graft-polymerizing maleic acid anhydride to a random copolymer of propylene and ethylene.

The polypropylene ICP has a structure (sea-island structure) in which a second phase is dispersed in a first phase. The first phase is constituted of homo PP. The second phase contains ethylene propylene rubber and polyethylene. The polypropylene ICP is a mixture containing PP, ethylene propylene rubber, and polyethylene.

### <Production of electrode lead>

An electrode lead having a lead main body and a surface treatment layer formed on the surface of the lead main body was produced. As the lead main body, a rectangular (width 45 mm × length 52 mm) nickel-plated copper foil was used.

### <Production of laminate for battery exterior>

A PET film having a thickness of 12 µm, a nylon film having a thickness of 15 µm, an aluminum foil having a thickness of 40 µm, and a PP film having a thickness of 80 µm were laminated by dry lamination to obtain a laminate for a battery exterior.

The PET film, the nylon film, the aluminum foil, and the PP film respectively correspond to the first film substrate 201, the second film substrate 202, the metal foil 203, and the sealant layer 204 (refer to FIG. 4).

### <Measurement of interlaminar peel strength>

For the sealing film, the 180-degree peel strength was measured using a tester (table-top precision universal tester manufactured by Shimadzu Corporation: Autograph AGS-500NX).

A cut (half cut) with a depth of several tens of µm was made from the first adhesive layer side of the sealing film. A cutter blade was inserted between the layers of a measurement test sample, which was a laminate of the sealing film and the base film, to peel off part of the layers. The end portion of the sealing film and the end portion of the base film were gripped by a gripping portion of the tester to peel off the sealing film and the base film in such a manner that the interlaminar degree of the peeled films was 180 degrees. The peeling rate was 50 mm/min.

When the peel strength was 20 N/15 mm or more, this was determined as "O" (OK) and was evaluated that peeling between the resins constituting the sealing film was prevented. When the peel strength was less than 20 N/15 mm, this was determined as "X" (NG) and was evaluated that peeling between the resins constituting the sealing film was not prevented.

### <Measurement of adhesive strength with respect to electrode lead>

The adhesive strength of the sealing film with respect to the electrode lead was measured as follows.

A laminate, which was obtained by superimposing the sealing film and the electrode lead to adhere them by heat-sealing, was cut into a band shape (width 10 mm × length 120 mm) to obtain a measurement test sample. The heat-sealing conditions were 180°C, 0.5 MPa, and 10 seconds.

For this measurement test sample, the 180-degree peel strength was measured as follows using a tester (table-top precision universal tester manufactured by Shimadzu Corporation: Autograph AGS-500NX).

The end portion of the sealing film and the end portion of the electrode lead were gripped by a gripping portion of the tester, and the sealing film was peeled off from the electrode lead under the condition for 180-degree peeling. The peeling rate was 300 mm/min.

When the peel strength was 20 N/10 mm or more, this was determined as "O" (OK) and was evaluated that the adhesive force with respect to the electrode lead was high. When the peel strength was less than 20 N/10 mm, this was determined as "X" (NG) and was evaluated that the adhesive force with respect to the electrode lead was low. Table 1 shows the results.

**[Table 1]**

| | Second adhesive layer | Base material layer | First adhesive layer | Interlaminar peeling | Adhesive strength |
|---|---|---|---|---|---|
| | 40 µm | 70 µm | 40 µm | | |
| Example 1 | (C) [100] | (C)/(A)/(B) [5/90/5] | (B) [100] | O | O |
| Example 2 | (C) [100] | (C)/(A)/(B) [15/70/15] | (B) [100] | O | O |
| Example 3 | (C) [100] | (C)/(A)/(B) [25/50/25] | (B) [100] | O | O |
| Example 4 | (C) [100] | (C)/(A)/(B) [35/30/35] | (B) [100] | O | O |
| Example 5 | (C) [100] | (C)/(A)/(B) [40/20/40] | (B) [100] | O | O |
| Example 6 | (C) [100] | (C)/(A)/(B) [60/20/20] | (B) [100] | O | O |
| Example 7 | (C) [100] | (C)/(A)/(B) [70/20/10] | (B) [100] | O | O |
| Example 8 | (C) [100] | (C)/(A)/(B) [20/20/60] | (B) [100] | O | O |
| Example 9 | (C) [100] | (C)/(A)/(B) [10/20/70] | (B) [100] | O | O |
| Comparative Example 1 | (C) [100] | (C)/(A)/(B) [0/100/0] | (B) [100] | X | O |
| Comparative Example 2 | (C) [100] | (C)/(A)/(B) [1/98/1] | (B) [100] | X | O |
| Comparative Example 3 | (C) [100] | (C)/(A)/(B) [0/75/25] | (B) [100] | X | O |
| Comparative Example 4 | (C) [100] | (C)/(A)/(B) [45/10/45] | (B) [100] | O | X |

As shown in Table 1, in Comparative Examples 1 to 3, peeling occurred between the first adhesive layer and the base material layer, or between the second adhesive layer and the base material layer.

In Comparative Example 4, although the resin layers did not peel off from each other, the adhesive strength with respect to the electrode lead was low.

On the other hand, in Examples 1 to 9, it was found that the adhesive strength with respect to the electrode lead was high, and the adhesive strength between the layers was strong.

### [Reference Signs List]

1 Sealing film
2 First adhesive layer
3 Second adhesive layer
4 Base material layer
10 Electrode lead member
11 Electrode lead (first base)
20 Storage container (second base)
30 Lithium ion battery (battery main body)
100 Battery

## Claims

1. A sealing film which seals between a metal first base and a second base, the sealing film comprising:
a first adhesive layer that mainly contains an acid-modified polyolefin and adheres to the first base;
a second adhesive layer that mainly contains a polyolefin and adheres to the second base; and
a base material layer provided between the first adhesive layer and the second adhesive layer,
wherein the base material layer contains the following components (A), (B), and (C),
a ratio [(A)/(B) + (C)] of a total amount of the component (B) and the component (C) to the component (A) is 90/10 to 20/80,
a content percentage of the component (B) with respect to a total amount of the component (A), the component (B), and the component (C) is 5% by mass or more and 70% by mass or less, and
a content percentage of the component (C) with respect to the total amount of the component (A), the component (B), and the component (C) is 5% by mass or more and 70% by mass or less,
the component (B): a resin constituting the first adhesive layer,
the component (C): a resin constituting the second adhesive layer, and
the component (A): a resin different from the component (B) and the component (C).

2. The sealing film according to claim 1, wherein a melting point of the component (A) is higher than a melting point of the resin constituting the first adhesive layer or the second adhesive layer.

3. The sealing film according to claim 1 or 2, wherein the polyolefin constituting the second adhesive layer includes an acid-modified polyolefin.

4. The sealing film according to any one of claims 1 to 3, wherein the component (A) includes a polypropylene resin having a melting point of 150°C or higher and 170°C or lower, and the resin constituting the second adhesive layer is a polypropylene or acid-modified polypropylene having a melting point of 110°C or higher and 150°C or lower.

5. The sealing film according to any one of claims 1 to 4, wherein the resin constituting the first adhesive layer is an acid-modified polypropylene having a melting point of 110°C or higher and 150°C or lower.

6. An electrode lead member comprising:
the sealing film according to any one of claims 1 to 5; and
the first base that is an electrode lead extending in one direction.

7. A battery comprising:
the electrode lead member according to claim 6;
a battery main body to which the electrode lead is connected; and
the second base that is a storage container storing the battery main body.
